# EUROPÄISCHE PATENTSCHRIFT

(11) **EP 1 147 992 B1**
(45) Veröffentlichungstag und Bekanntmachung des Hinweises auf die Patenterteilung: **11.08.2004**
(21) Anmeldenummer: 00108730.3
(22) Anmeldetag: 22.04.2000
(51) Int. Cl.: B65D 39/08, F01M 11/04

(54) **Verschlusssystem für Kunststofformteile**
Closure system for molded plastic parts
Systeme de fermeture pour pieces en plastique moulé

(43) Veröffentlichungstag der Anmeldung: 24.10.2001
(73) Patentinhaber: IBS Filtran Kunststoff-/Metallerzeugnisse GmbH, 51597 Morsbach (DE)
(72) Erfinder: Beer, Markus, 51597 Morsbach (DE); Rosendahl, Marco, 51597 Morsbach (DE)
(74) Vertreter: Lang, Friedrich, Dipl.-Ing.

(56) Entgegenhaltungen:
- EP-A- 0 461 344
- EP-A- 0 671 339
- DE-A- 3 606 052
- GB-A- 1 448 850
- US-A- 3 873 132
- US-A- 3 913 781
- US-A- 4 362 255
- US-A- 4 823 411
- US-A- 5 988 460

## Beschreibung

Die vorliegende Erfindung betrifft ein Verschlußsystem für Kunststofformteile sowie die Verwendung des Verschlußsystems im Motor- und Getriebefluidbereich.

Aus dem Stand der Technik sind bereits Behältnisse zum Aufbewahren von Flüssigkeiten oder Gasen bekannt.

So wird beispielsweise in der GB 1448850 A ein Kunststoffbehälter offenbart, welcher einen Halsabschnitt mit einem innenliegenden Gewinde als Befüllmöglichkeit und einen Verschluss mit einem Außengewinde zum Einschrauben in den Halsabschnitt sowie einen zwischen Halsabschnitt und Verschluss angeordneten Dichtungsring aufweist. Ferner befinden sich im Gewinde des Verschlusses zwei Barrieren auf jeweils gegenüberliegenden Seiten, die dazu dienen, das innenliegende Gewinde zu reinigen und es von in dem Behälter gelagerten und aufsteigenden Flüssigkeiten freizuhalten.

Die EP 0671339 A offenbart einen Spundstopfen aus thermoplastischem Kunststoff mit einer Entgasungsvorrichtung mit einem Schraubgewinde und einer umlaufenden Ringdichtung zum gasund flüssigkeitsdichten Einschrauben in ein innenliegendes Schraubgewinde einer Spundöffnung eines Behälters. Ferner wird ein im Inneren des Spundstopfen befindliches Überdrucksicherungssystem beschrieben, wobei ein pilzförmiger Kunststoffstopfen in eine Bohrung des Spundstopfens eindrückbar ist und so bei einem bestimmten Druck eine Entgasung des Behälters ermöglicht ist.

Die vorbeschriebenen Verschlusssysteme haben den Nachteil, dass sie gegenüber den insbesondere im Kraftfahrzeugbereich auftretenden dynamischen Belastungen, Vibrationen, Temperaturwechseln usw. anfällig sind.

Bei Systemen im Motor- oder Getrieberaum, die in direktem Kontakt mit Öl stehen, sind mitunter Verschlußsysteme zum Einfüllen oder Ablassen des Öls notwendig. Für die Auslegung solcher Verschlußsysteme wird in der Regel eine Konstruktion gewählt, die auf einer Kombination von Metall und Kunststoff beruht. Dabei wer den Profildichtungen oder O-Ringe verwendet, die die Abdichtung untereinander und zum abzudichtenden Bauteil gewährleisten. Selbst bei Gehäusebauteilen aus Kunststoff werden im Stand der Technik die Füll- und Ablaßschrauben und deren Gewinde in Metall ausgelegt. Im Stand der Technik werden beispielsweise Ölwannen mit Verschlußsystemen hergestellt indem Gewindebuchsen aus Metall, meist aus Stahl oder Messing, im Thermoplastspritzgießwerkzeug umspritzt oder nachträglich durch Wärme oder mittels Ultraschall in eine im Kunststoffgehäuse vorgeformte Stelle eingedrückt werden.

Ein weiteres Verfahren ist es Gewindebuchsen mit einem Bund in den Kunststoffbehälter einzudrücken. Dabei werden hohe Anforderungen an die Haltefestigkeit und Positionsgenauigkeit der eingebetteten Metallbuchse gestellt. Beim Umspritzen von Gewindemetallbuchsen besteht bei Veränderung der Toleranzen an der Buchse, im Spritzgießwerkzeug oder der Spritzgießparameter die Gefahr, daß der aufgeschmolzene Kunststoff an den Stirnseiten der Buchse oder sogar in die Gewindegänge eindringen kann. Bei Kunststoffformteilen, deren Buchsen durch Wärme oder mittels Ultraschall eingedrückt werden, besteht das Problem, daß aufgeschmolzener Kunststoff an den zuvor genannten Stellen auch austreten kann. Ein weiteres Problem betrifft das Recycling solcher Kunststoffformteile mit eingebetteten Metallteilen, da es sehr aufwendig ist diese verschiedenen Materialien wieder voneinander zu trennen.

Die technische Aufgabe ist es daher, ein Verschlüsssystem zü Schaffen, welches einfach in den abzudichtenden Behälts integriert werden kann, nür aüs einem Material besteht wird ein eigenständiges Lösen oder lockern der Kunststoffschraube aufgründ der Vibrationen oder Temperatürwechsel vermieden wird.

Die technische Aufgabe wird mit den Merkmalen des kennzeichnenden Teils des Ausprüchs 1 gelöst.

Die formschlüssige Rastung wird durch das Zusammenspiel der jeweils am Schraubenkopf und am Gehäuse angeformten Rastungen erzielt. Dadurch wird ein eigenständiges Lösen oder Lockern, sowie das Herausfallen der Kunststoffschraube aufgrund von Vibrationen oder eines Temperaturwechsels über Lebensdauer vermieden.

Durch Abstimmung der beiden Rastungen zueinander ist eine Rotation der Schraube nur mit erhöhtem Kraftaufwand möglich.

Gemäß der vorliegenden Erfindung wird die direkte Integration eines Verschlußsystems in die abzudichtenden Gehäusebauteile ermöglicht, wobei die für solche Bauteile notwendigen Funktionsanforderungen über die Lebensdauer sichergestellt werden. Durch den Wegfall zusätzlicher Metallbauteile wie Gewindebuchsen zur Übertragung der Anzugskräfte im Gewindebereich wird in vorteilhafter Weise die Anzahl der Einzelbauteile, die Produktionszeiten, die Produktionskosten, sowie das Gewicht stark reduziert. Die Auslegung des Verschlußsystems in Kunststoff erlaubt es weiterhin durch direkte Integration in die Konturgegebenheiten des Gehäusebauteils jede optimale Position, Form und Lage auszuwählen und zu nutzen. Weiterhin erfüllt das erfindungsgemäße Verschlußsystem die Anforderungen der Automobilindustrie für eine recyclinggerechte Auslegung, wobei eine kostenintensive, aufwendige Trennung von Kunststoff- und Metallteilen entfällt.

In einer bevorzugten Ausführungsform ist das Gewinde in das Kunststoffmaterial des Kunststofformteils eingearbeitet.

In einer weiteren bevorzugten Ausführungsform sind die Kunststoffschraube , das Kunststofformteil und das Gewinde aus dem gleichen Material gefertigt. Besonders bevorzugt wird die Kunststoffschraube , das Kunststofformteil und das Gewinde aus Polyamid 6.6 GF 35 % hergestellt.

In einer weiteren besonders bevorzugten Ausführungsform ist zwischen der Schraube aus Kunststoff und der Öffnung im Kunststofformteil ein Dichtelement angeordnet.

In einer weiteren Ausführungsform enthält die Kunststoffschraube eine Anzugskontur . Dabei ist die Anzugskontur vorzugsweise ein Innensechskant, Außensechskant oder eine Nutkontur.

In einer weiteren besonders bevorzugten Ausführungsform ist am Kunststofformteil eine vollständig oder teilweise um die Öffnung umlaufende Rippe vorgesehen. Besonders bevorzugt wird die Rastung an der Rippe angebracht. In einer besonders bevorzugten Ausführungsform ist die Rastung am Kopf der Kunststoffschraube angebracht.

In einer besonders bevorzugten Ausführungsform beträgt das Anzugsmoment der Kunststoffschraube aufgrund der Rastung bis 8 Nm. Vorzugsweise beträgt das Lösemoment der Kunststoffschraube aufgrund der Rastung bis 8 Nm. In einer besonders bevorzugten Ausführungsform beträgt das Lösemoment der Kunststoffschraube auf Grund der Rastung bis 5 Nm. Durch die Setz- und Kriecheigenschaften des Kunststoffes über die Lebensdauer und auf Grund der Temperatur entsteht in der Regel ein Anzugsmomentverlust bis auf ca. 3 Nm. Das verbleibende Anzugsmoment von bis zu 5 Nm reicht aus, um einen festen Sitz der Kunststoffschraube unter Beibehaltung ihrer Funktion zu gewährleisten. Das Übermaß der Rastung garantiert dabei, daß ein Lösen oder Lockern der Schraube und ein damit verbundener Flüssigkeitsverlust oder Leckage verhindert wird.

Das erfindungsgemäße Verschlußsystem wird im Motorfluidbereich verwendet. So können mit dem Verschlußsystem Ölwannen des Getriebes und des Motors, sowie die Behälter für die Kühlflüssigkeit oder die Bremsflüssigkeit ausgestattet werden.

Die Kunststoffschraube hat die Aufgabe ein Befüllen oder Ablassen von Flüssigkeiten, vorzugsweise Öl oder Kühlwasser, zu ermöglichen. Ein zwischen der Kunststoffschraube und dem Gehäuse gehaltenes Dichtelement, vorzugsweise ein O-Ring, übernimmt die Abdichtung. Dabei wird die Dichteigenschaft, unabhängig vom Losdrehmoment im Gewinde oder der Rastung, ausgelegt und gesichert. Die Befüll- oder Ablaßschraube hält das Dichtelement in Position, unabhängig von den im Gewinde oder in der Rastung herrschenden Löse- oder Anzugsmomenten.

Anhand der folgenden Figuren soll die erfindungsgemäße Vorrichtung weiter erläutert werden.
- Figur 1: zeigt einen Querschnitt durch das erfindungsgemäße Verschlußsystem.
- Figur 2: zeigt eine Aufsicht auf die Kunststoffschraube.
- Figur 3: zeigt einen Ausschnitt im Randbereich der Kunststoffschraube.

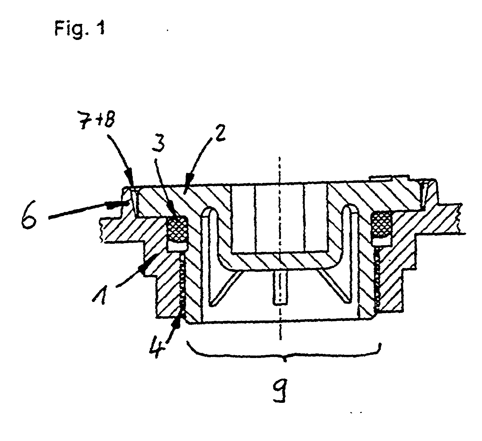

Figur 1 zeigt einen Querschnitt durch das erfindungsgemäße Verschlußsystem. Dabei ist die Kunststoffschraube 2 vollständig in das Gewinde 4 des Kunststoffformteils 1 eingedreht und somit die Öffnung 9 des Kunststofformteils 1 vollständig verschlossen. In dieser Ausführungsform ist eine Rippe 6 umlaufend um die Öffnung 9 an das Kunststofformteil 1 angebracht. Die Kunststoffschraube 2 besitzt einen Schraubenkopf, der in seinen Abmessungen an die Rippe 6 angepaßt ist. An der Rippe 6 und am Schraubenkopf sind Rastungen 7 bzw. 8 angebracht. Ein Dichtelement 3 ist zwischen Schraube und Kunststofformteil angeordnet und dichtet die Öffnung ab.

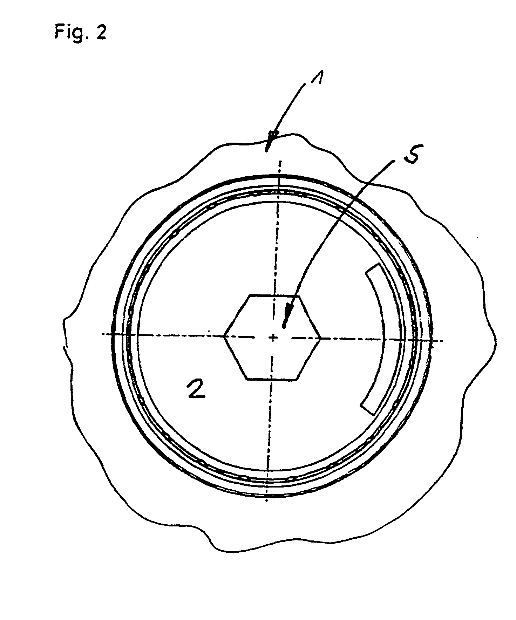

Figur 2 zeigt eine Draufsicht auf die Kunststoffschraube. In dieser Figur enthält die Kunststoffschraube 2 eine Anzugskontur 5, die hier als Innensechskant ausgestaltet ist.

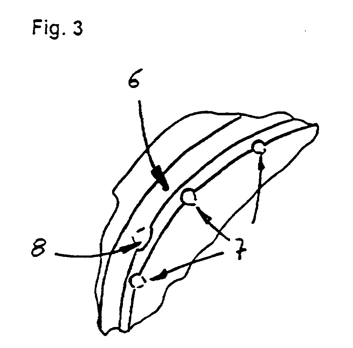

Figur 3 zeigt einen Ausschnitt im Randbereich der Kunststoffschraube. Darin ist die Rippe 6 mit der Rastung 8 sowie der Rand der Kunststoffschraube einschließlich ihrer Rastung 7 zu sehen.

### Bezugszeichenliste

- 1: Kunststofformteil
- 2: Kunststoffschraube
- 3: Dichtelement
- 4: Gewinde
- 5: Anzugskontur
- 6: Rippe
- 7: Rastung an der Kunststoffschraube
- 8: Rastung an der Rippe
- 9: Öffnung

## Patentansprüche

1. Verschlusssystem für Kunststoffformteile, umfassend eine Kunststoffschraube (2) und ein in das Kunststoffformteil angeformtes innenliegendes Gewinde (4) zur Aufnahme der Kunststoffschraube (2), wobei das Gewinde aus Kunststoff besteht, **dadurch gekennzeichnet, dass** an der Kunststoffschraube (2) eine Rastung (7) am Kunststoffformteil eine Rastung (8) angebracht ist, wobei eine formschlüssige Rastung zwischen der Kunststoffschraube (2) und dem Kunststoffformteil erzielt wird.

2. Verschlusssystem nach Anspruch 1, **dadurch gekennzeichnet, dass** das Gewinde (4) in das Kunststoffmaterial des Kunststofformteils (1) eingearbeitet ist.

3. Verschlusssystem nach Anspruch 1 oder 2, **dadurch gekennzeichnet, dass** die Kunststoffschraube (2), Kunststofformteil (1) und das Gewinde (4) aus dem gleichen Material gefertigt sind.

4. Verschlusssystem nach Anspruch 3, **dadurch gekennzeichnet, dass** die Kunststoffschraube (2), das Kunststoffformteil (1) und das Gewinde (4) aus Polyamid 6.6 GF 35% gefertigt sind.

5. Verschlusssystem nach den Ansprüchen 1 bis 4, **dadurch gekennzeichnet, dass** zwischen der Schraube aus Kunststoff (2) und der Öffnung (9) im Kunststoffformteil ein Dichtelement angeordnet ist.

6. Verschlusssystem nach den Ansprüchen 1 bis 5, **dadurch gekennzeichnet, dass** die Kunststoffschraube (2) eine Anzugskontur (5) enthält.

7. Verschlusssystem nach Anspruch 6, **dadurch gekennzeichnet, dass** die Anzugskontur (5) ausgewählt ist aus der Gruppe Innensechskant, Außensechskant oder Nutkontur.

8. Verschlusssystem nach den Ansprüchen 1 bis 7, **dadurch gekennzeichnet, dass** am Kunststoffformteil eine vollständig oder teilweise um die Öffnung (9) umlaufende Rippe (6) vorgesehen ist.

9. Verschlusssystem nach Anspruch 1,**dadurch gekennzeichnet, dass** die Rastung (8) an der Rippe (6) angebracht ist.

10. Verschlusssystem nach Anspruch 1, oder 9, **dadurch gekennzeichnet, dass** die Rastung (7) am Kopf der Kunststoffschraube (2) angebracht ist.

11. Verschlusssystem nach den Ansprüchen 1, 9, 10, **dadurch gekennzeichnet, dass** das Anzugsmoment der Kunststoffschraube (2) aufgrund der Rastung (7,8) bis 8 Nm beträgt.

12. Verschlusssystem nach den Ansprüchen 1 und 9 bis 11, **dadurch** gekennieichnet, dass das Lösemoment der Kunststoffschraube (2) aufgrund der Rastung (7, 8) bis 8 Nm beträgt.

13. Verschlusssystem nach den Ansprüchen 1 und 9 bis 12, **dadurch gekennzeichnet, dass** das Lösemoment der Kunststoffschraube (2) aufgrund der Rastung (7, 8) bis 5 Nm beträgt.

14. Verwendung des Verschlusssystems gemäß den Ansprüchen 1 bis 13 im Motorfluidbereich.

## Claims

1. Closure system for plastic structural parts, comprising a plastic screw (2) and an internal thread (4) formed in the plastic part for receiving the plastic screw (2), where the thread is comprised of plastic, **characterized in that** a catch (7) is applied on the plastic screw (2) and a catch (8) is applied on the plastic structural part, wherein a positive interlocking catch is obtained between the plastic screw (2) and the plastic structural part.

2. Closure system according to Claim 1, **characterized in that** the thread (4) is incorporated into the plastic material of the plastic shaped part (1).

3. Closure system according to Claim 1 or 2, **characterized in that** the plastic screw (2), plastic shaped part (1) and the thread (4) are produced of the same material.

4. Closure system according to Claim 3, **characterized in that** the plastic screw (2), the plastic shaped part (1) and the thread (4) are produced of Polyamid 6.6 GF 35%.

5. Closure system according to Claims 1-4, **characterized in that** a sealing element is interposed between the screw of plastic (2) and the opening (9) in the plastic shaped part.

6. Closure system according to Claims 1-5, **characterized in that** the plastic screw (2) contains a tapered contour (5).

7. Closure system according to Claim 6, **characterized in that** the tapered contour (5) is selected from the group: inner hexagon, outer hexagon or groove contour.

8. Closure system according to Claims 1-7, **characterized in that** a rib (6) running completely or partially around the opening (9) is provided on the plastic shaped part.

9. Closure system according to Claim 1, **characterized in that** the catch (8) is located on the rib (6).

10. Closure system according to Claim 1 or 9, **characterized in that** the catch (7) is located on the head of the plastic screw (2).

11. Closure system according to Claims 1, 9, 10, **characterized in that** the initial torque of the plastic screw (2) is up to 8 Nm due to the catches (7,8).

12. Closure system according to Claims 1 and 9-11, **characterized in that** the loosening moment of the plastic screw (2) is up to 8 Nm due to the catches (7,8).

13. Closure system according to Claims 1 and 9-12, **characterized in that** the loosening moment of the plastic screw (2) is up to 5 Nm due to the catches (7,8).

14. Use of the closure system according to Claims 1-13 in the motor fluid area.

## Revendications

1. Système de fermeture pour des pièces moulées en matière plastique comprenant une vis en plastique (2) et un taraudage (4) venu de moulage dans la pièce moulée en matière plastique et destiné à recevoir la vis en plastique (2), le taraudage étant réalisé en matière plastique,
**caractérisé en ce que** dans la vis en plastique (2) est pratiqué un cran (7) et sur la pièce moulée en matière plastique, un cran (8), un clipsage par coopération de formes de la vis en plastique (2) avec la pièce moulée en matière plastique étant ainsi réalisé.

2. Système de fermeture selon la revendication 1,
**caractérisé en ce que** le taraudage (4) est exécuté dans la matière plastique de la pièce moulée en matière plastique (1).

3. Système de fermeture selon la revendication 1 ou 2,
**caractérisé en ce que** la vis en plastique (2), la pièce moulée en matière plastique (1 ) et le taraudage (4) sont réalisés dans le même matériau.

4. Système de fermeture selon la revendication 3,
**caractérisé en ce que** la vis en plastique (2), la pièce moulée en matière plastique (1) et le taraudage (4) sont réalisés en polyamide 6,6 35 % GF.

5. Système de fermeture selon les revendications 1 à 4,
**caractérisé en ce qu'**un élément d'étanchéité est disposé entre la vis en plastique (2) et l'ouverture (9) ménagée dans la pièce moulée en matière plastique.

6. Système de fermeture selon les revendications 1 à 5,
**caractérisé en ce que** la vis en plastique (2) comporte une empreinte de serrage (5).

7. Système de fermeture selon la revendication 6,
**caractérisé en ce que** l'empreinte de serrage (5) est choisie parmi les empreintes à six pans creux, les empreintes hexalobées ou les empreintes rainurées.

8. Système de fermeture selon les revendications 1 à 7,
**caractérisé en ce qu'**est prévue sur la pièce moulée en matière plastique une nervure (6) s'étendant sur tout ou partie de la circonférence de l'ouverture (9).

9. Système de fermeture selon la revendication 1,
**caractérisé en ce que** le cran (8) est pratiqué dans la nervure (6).

10. Système de fermeture selon la revendication 1 ou 9,
**caractérisé en ce que** le cran (7) est pratiqué dans la tête de la vis en plastique (2).

11. Système de fermeture selon les revendications 1, 9, 10,
**caractérisé en ce qu'**en raison du cran (7, 8) le couple de serrage de la vis en plastique (2) peut aller jusqu'à 8 Nm.

12. Système de fermeture selon les revendications 1 et 9 à 11,
**caractérisé en ce qu'**en raison du cran (7, 8) le couple de desserrage de la vis en plastique (2) peut aller jusqu'à 8 Nm.

13. Système de fermeture selon les revendications 1 et 9 à 12,
**caractérisé en ce qu'**en raison du cran (7, 8) le couple de desserrage de la vis en plastique (2) peut aller jusqu'à 5 Nm.

14. Application du système de fermeture selon les revendications 1 à 13 au domaine des fluides moteur.
